(19) 

**Europäisches Patentamt**
**European Patent Office**
**Office européen des brevets**

(11) **EP 4 632 604 A1**

(12) **EUROPEAN PATENT APPLICATION**

(43) Date of publication:
**15.10.2025 Bulletin 2025/42**

(51) International Patent Classification (IPC):
**G06F 17/16** $^{(2006.01)}$     **G06N 3/0475** $^{(2023.01)}$
**G06N 3/096** $^{(2023.01)}$

(21) Application number: **24170028.5**

(22) Date of filing: **12.04.2024**

(52) Cooperative Patent Classification (CPC):
**G06F 17/16; G06N 3/04; G06N 3/045;**
**G06N 3/0475; G06N 3/08; G06N 3/084;**
**G06N 3/096**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
• **Khoreva, Anna**
  **70197 Stuttgart (DE)**
• **Bini, Massimo**
  **72072 Tübingen (DE)**

Remarks:
    Amended claims in accordance with Rule 137(2)
    EPC.

(54) **DEVICE AND METHOD FOR PARALLELIZED FINETUNING OF A NEURAL NETWORK**

(57)    Computer-implemented method for finetuning a neural network (60) comprising the steps of:

• Providing an input ($x_l$) to a layer ($l$, $l_1$, $l_2$, $l_k$) of the neural network (60),
wherein the input ($x_l$) is an input datum ($x_i$) of the neural network (60) or a representation of the input datum ($x_i$);

• Determining a block-diagonal matrix ($Q$);

• Determining a first matrix ($M_1$) by multiplying the block-diagonal matrix ($Q$) with a weight matrix ($W$) of the layer, wherein the result of the multiplication is obtained by multiplying at least a plurality, preferably all, blocks ($B_1$, $B_2$, $B_n$) of the block-diagonal matrix ($Q$) with a respective part ($W_1$, $W_2$, $W_n$) of the weight matrix ($W$) in parallel computing operations and combining the result to form the first matrix ($M_1$);

• Determining an output ($o_l$) of the layer ($l$, $l_1$, $l_2$, $l_k$) by multiplying the first matrix ($M_1$) with the input ($x_l$) of the layer ($l$, $l_1$, $l_2$, $l_k$);

• Determining an output ($y_i$) of the neural network (60) based on the output ($o_l$) of the layer ($l$, $l_1$, $l_2$, $l_k$);

• Adapting elements of the block-diagonal matrix ($Q$) based on a difference of the output ($y_i$) of the neural network (60) and a desired output ($t_i$) with respect to the input datum ($x_i$).

**Fig. 1**

EP 4 632 604 A1

**Description**

Technical field

The invention concerns a method for finetuning a neural network, a training system configured for finetuning the neural network, a method to perform inference on the finetuned network, a system configured to run the inference method, a computer program, and a machine-readable storage medium.

Prior art

Qiu et al. "Controlling text-to-image diffusion by orthogonal finetuning", 2023, https://arxiv.org/abs/2306.07280v1 discloses a finetuning method -- Orthogonal Finetuning (OFT), for adapting text-to-image diffusion models to downstream tasks. Unlike existing methods, OFT can provably preserve hyperspherical energy which characterizes the pairwise neuron relationship on the unit hypersphere.

Technical background

Neural networks are increasingly used in various fields to automate processes such as environment detection for autonomous robots. Especially larger neural networks known as foundation models are typically very expensive to train, wherein the price here relates to time for training such a neural network as well as energy resources required to run the training on a computer. Hence, a common paradigm is to use neural networks previously trained on vast amount of data and train it on a smaller dataset in fewer trainings iterations. This paradigm is known as finetuning. However, if a neural network is large such as foundation models, finetuning, even though reducing the resources necessary, still requires considerable resources.

An advantage of the invention is that the process of finetuning is optimized using the specifics of the computer the finetuning process runs on. By training elements of a block-diagonal matrix, the finetuning process can be parallelized over threads or cores of the computer or may even computed in a distributed computing environment such as a cluster.

Disclosure of the invention

In a first aspect, the invention concerns a computer-implemented method for finetuning a neural network comprising the steps of:

- Providing an input to a layer of the neural network, wherein the input is an input datum of the neural network or a representation of the input datum;
- Determining a block-diagonal matrix;
- Determining a first matrix by multiplying the block-diagonal matrix with a weight matrix of the layer, wherein the result of the multiplication is obtained by multiplying at least a plurality, preferably all, blocks of the block-diagonal matrix with a respective part of the weight matrix in parallel computing operations and combining the result to form the first matrix;
- Determining an output of the layer by multiplying the first matrix with the input of the layer;
- Determining an output of the neural network based on the output of the layer;
- Adapting elements of the block-diagonal matrix based on a difference of the output of the neural network and a desired output with respect to the input datum.

Finetuning may especially be understood as a training procedure of the neural network that takes a neural network previously trained on at least one (potentially) different task and executes another training procedure for another (potentially) different task. Finetuning may especially be used for neural networks known as foundation models in order to adapt these large neural networks to specific tasks with only minimal additional training.

In the method, a layer of the neural network is provided with the input datum or the representation of the input datum. The representation may especially be an output of a layer preceding the layer recited in the method. The representation may especially be understood as a vector or matrix or tensor of values in a space of a specific dimension, wherein the representation is obtained by projecting the input datum into the space by a predefined operation. The operation may, for example, also be a pre-processing operation and the layer recited in the method may be the first layer among the layers of the neural network. Alternatively, the input datum may also be provided to the layer directly of the layer is the first layer among the layers of the neural network.

The layer may be a linear layer (also known as fully connected layer) in which case the elements of the weight matrix are already in form of a matrix. In case the layer is a convolutional layer, the tensor of weights of the convolutional layer may be reshaped into a matrix (i.e., the weight matrix) by, e.g., stacking the three-dimensional tensor along a chosen dimension to obtain a two-dimensional tensor, i.e., a matrix.

Finetuning of the neural network is achieved by updating the block-diagonal matrix. Preferably, the weight matrix of the neural network remains the same during finetuning, which is also referred to as "the weight matrix is frozen".

For multiplying the block-matrix with the weight matrix, a respective part of the weight matrix is determined. This respective part can be understood to be a slice of the weight matrix along its height if the block-diagonal matrix is multiplied to the weight matrix from the left side and a slice of the weight matrix along its width if the block-diagonal matrix is multiplied to the weight matrix from the right side.

IN the following, the operations will be described for multiplying the block-diagonal matrix from the left side to the weight matrix. However, the same operations can be run multiplying the block-diagonal matrix from the right by switching the height dimension for the width dimension in the following.

Each slice of the weight matrix has a height according to the height of the block the slice corresponds to. The respective parts can be obtained by slicing the weight matrix along the height dimension according to the height of the blocks in the order of the blocks from top to bottom. For example, if there are three blocks in the block diagonal matrix having a height of 4, 8 and 3, the weight matrix is sliced along the height dimension after the first 4 elements and then again after the next 8 elements resulting in parts of height 4, 8, and 3. The resulting parts correspond to the blocks in the block diagonal matrix.

The results of the parallel multiplications are then combined to form the first matrix. The combination may be achieved by stacking the result of each parallel multiplication along a height dimension if the block-diagonal matrix was multiplied to the weight matrix from the left. If it is multiplied from the right, the results may be stacked along a width dimension of the individual results.

The first matrix can then be multiplied to the input of the layer and optionally a bias is added to the multiplication. The result is then forwarded to another layer or used as output of the neural network if the layer is a last layer of the neural network.

Adapting the weights may especially be understood as finetuning the neural network. The finetuning may especially be supervised, semi-supervised or unsupervised. The desired value may hence be a label of the input datum (supervised learning and semi-supervised learning) or, e.g., a desired density (unsupervised learning). Finetuning may be conducted through standard means such as a gradient descent-based finetuning or finetuning based on evolutionary algorithms or any other suitable method for adapting the weights.

For finetuning, the output of the neural network and the desired output may especially be used as input to a loss function. A gradient of the loss function may then be propagated backwards through the neural network in order to then adapt the weights using a gradient descent method such as stochastic gradient descent, Adam or the like. Finetuning may especially be achieved by means of an auto-differentiating training framework (also known as autodiff).

The inventors surprisingly found that block-diagonalization allows for splitting up the computation of an output of the layer into separate operations that can be executed in parallel. Advantageously, the authors found that this parallel computation speeds up the process of a forward pass through the neural network and hence speeds up the process of finetuning the neural network.

Interestingly, the total number of trainable parameters of the neural network remains constant for any *n* number of blocks in the block-diagonal matrix. This stands in contrast to block-diagonal OFT, where the use of higher block counts was introduced to minimize the number of parameters while introducing noticeable decreases in adaptation performance. Instead, the inventors found the performance of the neural network to be consistent over increasing block counts, thus trading an improved computational fingerprint with negligible performance decrease.

In preferred embodiments a block, preferably all blocks, of the block-diagonal matrix characterizes a Householder transformation.

A block characterizing a Householder transformation may be understood as the block forming a sub-matrix of the block-diagonal matrix, wherein the sub-matrix is a Householder matrix.

The inventors found that, as Householder transformations reflect the weight matrix with respect to planes defined by unit vectors, these types of transformations are well-suited for the efficient finetuning of neural networks, as they keep the distance to the transformation neutral element - the identity matrix - constant, which minimizes the risk of catastrophically overwriting weights of the neural network. In other words, using Householder matrices as blocks reduces the risk of finetuning the neural network to unlearn concepts that it has learned in the previous training or previous training phase.

Hence, one advantageous effect of the proposed method is that the block-diagonal matrix may be "attached" to the neural network during finetuning only while still retaining the performance of the neural network. That is, the method is especially suitable for parallelizing and hence speeding up finetuning of a previously trained neural network with only minimal parameters to be updated while maintaining or improving the performance of the neural network.

In the preferred embodiments the block-diagonal matrix is preferably determined according to the formula:

$$Q = diag(H^1, ..., H^n) = I - 2 \begin{pmatrix} \hat{u}_1\hat{u}_1^T & & \\ & \ddots & \\ & & \hat{u}_n\hat{u}_n^T \end{pmatrix},$$

wherein $\hat{u}_1$ to $\hat{u}_n$ are vectors for the *n* blocks of the block-diagonal matrix, each block in the matrix on the right size of the equation is an outer product of one of the vectors respectively and *I* is the identity matrix.

The identity matrix may especially be understood as having a width and a height equivalent to a height of the weight matrix.

Each block may be understood as having a width and height equivalent to a length of the vector used in the outer product for creating the respective block.

The vectors used for creating the block-diagonal matrix may especially be understood as being trainable. That is, the vectors may be adapted during training of the neural network as well, preferably also based on the difference of the output of the neural network and the desired output, e.g., they may be trained using the same loss function as is used in the embodiments for training the neural network using a loss function.

In the preferred embodiments, the vectors $\hat{u}_1$ to $\hat{u}_n$ are preferably trainable parameters of the neural network and adapting elements of the block-diagonal matrix is achieved by adapting at least one of the vectors $\hat{u}_1$ to $\hat{u}_n$.

Advantageously, using the vectors as parameters instead of the blocks of the block-diagonal matrix allows for ensuring by construction that each block is always a Householder transformation irrespective of the adaption applied to the vectors. Hence, no additional measures need to be taken in order to ensure that each block is a Householder transformation even after adapting the parameters of the neural network.

In the preferred embodiments, the input datum preferably comprises or consists of a sensor signal, an image or a digital audio signal and/or and the output of the neural network preferably characterizes a classification of the input datum and/or a result of a regression analysis of the input datum and/or a probability of the input datum to occur in a dataset.

The concrete inputs and the concrete outputs are understood to all be disclosed in pairwise combination, i.e., the input datum may be a sensor signal and the output datum may characterize a classification of the sensor signal, the input datum may be an image and the output datum may characterize a classification of the image, and so forth.

The output characterizing a classification may be understood as the output comprising or consisting of one or multiple values that represent a classification of the input datum into at least one of a plurality of classes, e.g., in terms of probabilities per class, logits per class, a class, a character string of the label of the class or any other suitable representation of classification. It is understood that semantic segmentation, instance segmentation and object detection are all special forms of classification, i.e., if the neural network is configured for either of this uses cases, the output of the neural network still characterizes a classification of ist input datum (i.e., a classification for each pixel of an image used as input).

The output characterizing a result of a regression analysis may be understood as the output comprising or consisting of one or multiple real-values determined for the input datum.

The output characterizing a probability of the input datum to occur in a training dataset may be understood as the neural network being configured for modelling a probability distribution function that is able to determine - for a given input datum - a density value characterizing how probable it is to observe the input datum given the training data of the neural network. This probability value may, for example, be used as part of a method for anomaly detection.

In other embodiments, the input datum may comprise or consist of a textual description of an image and the output of the neural network comprises or consists of an image with visual properties as was desired by the textual description.

In other embodiments, the input datum may comprise or consist of a textual description and the output of the neural network also comprises of consists of a textual description.

The inventors found that these types neural networks (text in, text out) especially benefit from the method for finetuning. Advantageously, the method for finetuning allows these types of neural networks to achieve the highest performance among known finetuning methods.

In any one of the embodiments, the layer output of the layer may also be determined by additionally adding a bias value to the result of the multiplication of the first matrix and the input and providing the result of the addition as output of the layer.

The inventors found that adding a bias before returning the output may additionally increase the performance of the neural network. The bias may be a scalar value or a vector. The bias may especially be understood as a trainable parameter of the neural network.

In any one of the embodiments, the neural network may comprise a plurality of layers configured as the layer.

In particular, for each layer comprising weights (e.g., linear layers, convolutional layers) a block diagonal matrix may be determined and adapted during finetuning. However, the exact configuration, which weight matrix shall be appended by a block diagonal matrix according to any one embodiment presented herein is a hyperparameter of the finetuning method and may be determined according to any known hyperparameter tuning method.

In another aspect, the invention concerns a computer-implemented method for determining an output of a neural network using an input datum as input to the neural network, wherein the neural network, the input datum, and the output are configured according to any one of the embodiments described above.

This aspect relates to performing inference on the neural network and is hence related to the finetuning method by means of using a same product, namely the neural network using the parallel computation of the multiplication of the block-diagonal matrix with the weight matrix. Advantageously, inference benefits form the same aspects as does the finetuning method, i.e., the computation of the neural network is sped up.

Embodiments of the invention will be discussed with reference to the following figures in more detail. The figures show:

Figure 1    a layer of a neural network;

Figure 2    the neural network;

Figure 3    a training system for training the neural network;

Figure 4    a control system using a neural network for controlling a technical system;

Figure 5    the control system controlling an at least partially autonomous robot;

Figure 6    the control system controlling a manufacturing machine.

Description of the embodiments

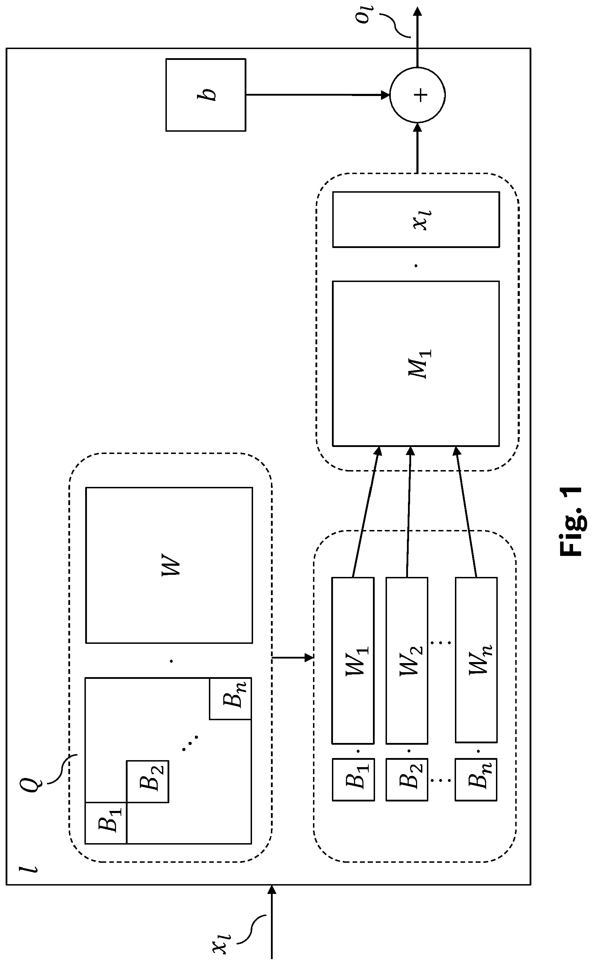

Figure 1 shows an embodiment of a layer (*l*) of a neural network (60). The layer receives an input ($x_l$) and provides an output ($o_l$) based on the input ($x_l$). In the layer (*l*), a block-diagonal matrix (*Q*) is determined that comprises a plurality of blocks ($B_1, \ldots, B_n$). At least one block but preferably all blocks characterize a Householder transformation. In other words, the at least one block ($B_1, \ldots, B_n$) is a matrix that describes a reflection about a plane or hyperplane containing the origin.

Determining the block-diagonal matrix (*Q*) may be achieved in a plurality of ways. For example, if the neural network is being finetuned or trained, the block-diagonal matrix may especially be provided based on parameters of the neural network. If the neural network is used for inference, a previously determined block-diagonal matrix (*Q*) may be stored during training or finetuning and then be loaded for inference.

The layer (*l*) also comprises a weight matrix (*W*). The block-diagonal matrix (*Q*) is of a shape such that it can be multiplied with the weight matrix (*W*). As the matrix (*Q*) is block-diagonal, each block ($B_1, \ldots, B_n$) of the block-diagonal matrix (*Q*) has a corresponding slice in the weight matrix (*W*) (depicted in dashed lines for matrix W). For a given block, a corresponding slice may be understood as the slice of the weight matrix (*W*) that is not multiplied with values outside of the block ($B_1, \ldots, B_n$). For example, in the figure the block-diagonal matrix (*Q*) is multiplied from the left side to the weight matrix (*W*) so the weight matrix (*W*) may be sliced along the height dimension of the matrix. Each slice ($W_1, \ldots, W_n$) is then be multiplied with its corresponding block ($B_1, \ldots, B_n$) in a parallel computing operation. The resulting first matrix ($M_1$) may then be multiplied with the input ($x_l$) in order to determine the output ($o_l$). Preferably, a bias value (*b*) is added to the result of the multiplication and the result of this sum may be provided as output ($o_l$).

For training or finetuning, the block-diagonal matrix (*Q*) may especially be determined such that each block is a Householder transformation. The block-diagonal matrix (*Q*) is preferably determined according to the formula:

$$Q = diag(H^1, \ldots, H^n) = I - 2 \begin{pmatrix} \hat{u}_1 \hat{u}_1^T & & \\ & \ddots & \\ & & \hat{u}_n \hat{u}_n^T \end{pmatrix},$$

wherein $\hat{u}_1$ to $\hat{u}_n$ are vectors for the *n* blocks of the block-diagonal matrix, each block in the matrix on the right size of the equation is an outer product of one of the vectors respectively and *I* is the identity matrix.

The identity matrix may especially be understood as having a width and a height equivalent to a height of the weight matrix (*W*).

Each block ($B_1, \ldots, B_n$) may be understood as having a width and height equivalent to a length of the vector used in the outer product for creating the respective block ($B_1, \ldots, B_n$).

The vectors used for creating the block-diagonal matrix (*Q*) may especially be understood as being trainable. That is, the vectors may be adapted during training or finetuning of the neural network as well, preferably also based on the difference of the output of the neural network and the desired output, e.g., they may be trained using the same loss function as is used in the embodiments for training the neural network using a loss function.

Preferably, the vectors $\hat{u}_1$ to $\hat{u}_n$ are trainable parameters of the neural network and adapting elements of the block-diagonal matrix $(Q)$ is achieved by adapting at least one of the vectors $\hat{u}_1$ to $\hat{u}_n$.

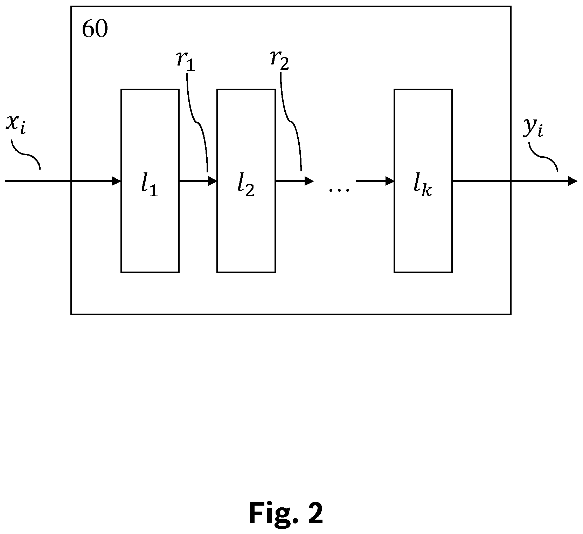

Figure 2 shows a neural network (60) comprising the layer $(l)$ as described above. The neural network (60) is provided an input $(x_i)$, which is processed by layers $(l_1, l_2, l_k)$ of the neural network (60) in order to determine an output $(y_i)$.

A first layer $(l_1)$ of the neural network (60) receives the input $(x_i)$ as input while other layers receive representations $(r_1, r_2)$ of the input $(x_i)$

Preferably, a plurality of, preferably all, layers $(l_1, l_2, l_k)$ in the neural network (60) comprising a weight matrix $(W)$ (e.g., a plurality of linear layers and/or a plurality of convolutional layers) may be designed according to the layer $(l)$ as described above. That is, each such a layer $(l)$ may comprise a block-diagonal matrix $(Q)$ determined and used according to any one of the embodiments described above.

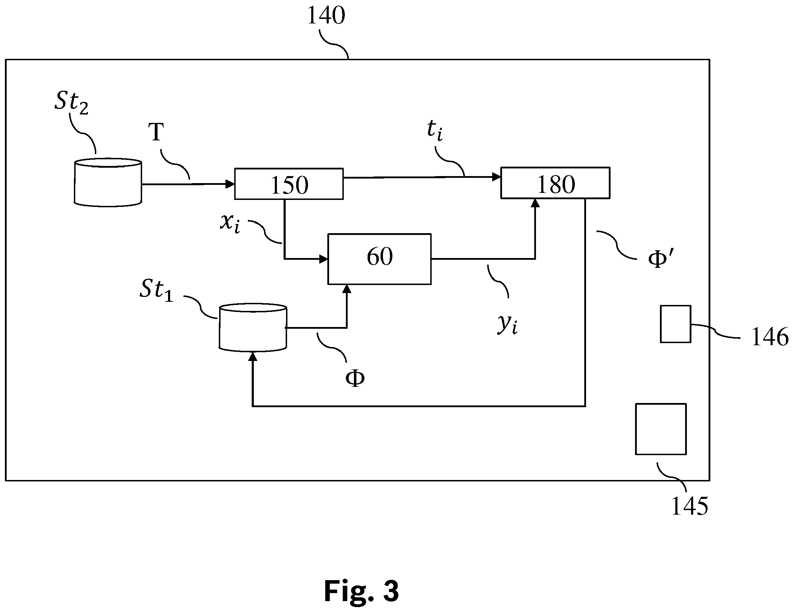

Figure 3 shows an embodiment of a training system (140) for training the neural network (60) of the control system (40) by means of a training data set (T). The training data set (T) comprises a plurality of input datums $(x_i)$ which are used for training the neural network (60), wherein the training data set (T) further comprises, for each input datum $(x_i)$, a desired output datum $(t_i)$ which corresponds to the input datum $(x_i)$ and characterizes a classification of the input datum $(x_i)$.

The input datum may comprise or consist of a sensor signal, an image or a digital audio signal and/or and the output of the neural network preferably characterizes a classification of the input datum and/or a result of a regression analysis of the input datum and/or a probability of the input datum to occur in a dataset.

The concrete inputs and the concrete outputs are understood to all be disclosed in pairwise combination, i.e., the input datum may be a sensor signal and the output datum may characterize a classification of the sensor signal, the input datum may be an image and the output datum may characterize a classification of the image, and so forth.

The output characterizing a classification may be understood as the output comprising or consisting of one or multiple values that represent a classification of the input datum into at least one of a plurality of classes, e.g., in terms of probabilities per class, logits per class, a class, a character string of the label of the class or any other suitable representation of classification. It is understood that semantic segmentation, instance segmentation and object detection are all special forms of classification, i.e., if the neural network is configured for either of this uses cases, the output of the neural network still characterizes a classification of ist input datum (i.e., a classification for each pixel of an image used as input).

The output characterizing a result of a regression analysis may be understood as the output comprising or consisting of one or multiple real-values determined for the input datum.

The output characterizing a probability of the input datum to occur in a training dataset may be understood as the neural network being configured for modelling a probability distribution function that is able to determine - for a given input datum - a density value characterizing how probable it is to observe the input datum given the training data of the neural network. This probability value may, for example, be used as part of a method for anomaly detection.

Alternatively, the input datum may comprise or consist of a textual description of an image and the output of the neural network comprises or consists of an image with visual properties as was desired by the textual description.

Alternatively, the input datum may comprise or consist of a textual description and the output of the neural network also comprises of consists of a textual description.

For training, a training data unit (150) accesses a computer-implemented database $(St_2)$, the database $(St_2)$ providing the training data set (T). The training data unit (150) determines from the training data set (T) preferably randomly at least one input datum $(x_i)$ and the desired output datum $(t_i)$ corresponding to the input datum $(x_i)$ and transmits the input datum $(x_i)$ to the neural network (60). The neural network (60) determines an output datum $(y_i)$ based on the input datum $(x_i)$.

The desired output datum $(t_i)$ and the determined output datum $(y_i)$ are transmitted to a modification unit (180).

Based on the desired output datum $(t_i)$ and the determined output datum $(y_i)$, the modification unit (180) then determines new parameters $(\Phi')$ for the neural network (60). For this purpose, the modification unit (180) compares the desired output datum $(t_i)$ and the determined output datum $(y_i)$ using a loss function. The loss function determines a first loss value that characterizes how far the determined output datum $(y_i)$ deviates from the desired output datum $(t_i)$. In the given embodiment, a negative log-likelihood function is used as the loss function. Other loss functions are also conceivable in alternative embodiments.

Furthermore, it is conceivable that the determined output datum $(y_i)$ and the desired output datum $(t_i)$ each comprise a plurality of sub-signals, for example in the form of tensors, wherein a sub-signal of the desired output datum $(t_i)$ corresponds to a sub-signal of the determined output datum $(y_i)$. It is conceivable, for example, that the neural network (60) is configured for object detection and a first sub-signal characterizes a probability of occurrence of an object with respect to a part of the input datum $(x_i)$ and a second sub-signal characterizes the exact position of the object. If the determined output datum $(y_i)$ and the desired output datum $(t_i)$ comprise a plurality of corresponding sub-signals, a second loss value is preferably determined for each corresponding sub-signal by means of a suitable loss function and the determined second loss values are suitably combined to form the first loss value, for example by means of a weighted sum.

The modification unit (180) determines the new parameters ($\Phi'$) based on the first loss value. In the given embodiment, this is done using a gradient descent method, preferably stochastic gradient descent, Adam, or AdamW. In further embodiments, training may also be based on an evolutionary algorithm or a second-order method for training neural networks.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters ($\Phi'$) determined in a previous iteration are used as parameters ($\Phi$) of the neural network (60).

Furthermore, the training system (140) may comprise at least one processor (145) and at least one machine-readable storage medium (146) containing instructions which, when executed by the processor (145), cause the training system (140) to execute a training method according to one of the aspects of the invention.

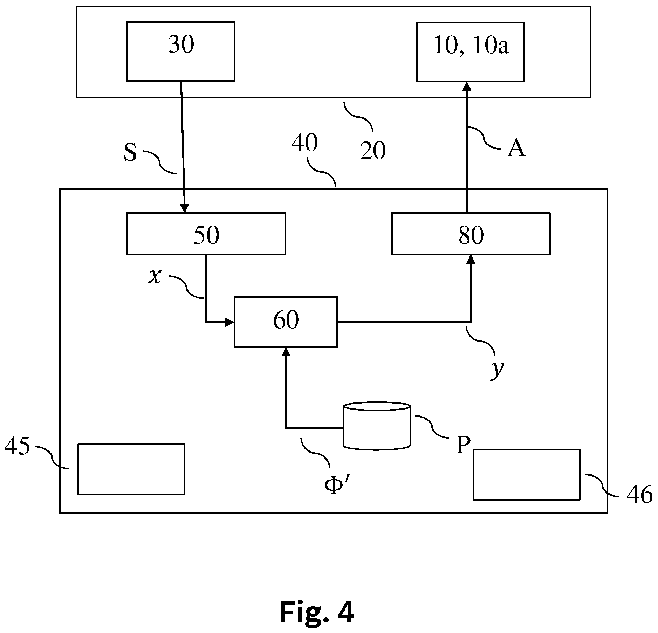

Figure 4 shows an embodiment of a control system (40) using the neural network (60) for controlling an actuator (10) in its environment (20). The actuator (10) interacts with a control system (40). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output datum (S) of the sensor (30) (or, in case the sensor (30) comprises a plurality of sensors, an output datum (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input datums (x). Alternatively, in case of no receiving unit (50), each sensor signal (S) may directly be taken as an input datum (x). The input datum (x) may, for example, be given as an excerpt from the sensor signal (S). Alternatively, the sensor signal (S) may be processed to yield the input datum (x). In other words, the input datum (x) is provided in accordance with the sensor signal (S).

The input datum (x) is then passed on to the neural network (60).

The neural network (60) is parametrized by parameters ($\Phi$), which are stored in and provided by a parameter storage ($St_1$). The parameters include especially the values of the block-diagonal matrix (Q) or block-diagonal matrices (Q) and the weight matrix (W) or the weight matrices (W).

The neural network (60) determines an output datum (y) from the input datums (x). The output datum (y) comprises information that assigns one or more labels to the input datum (x). The output datum (y) is transmitted to an optional conversion unit (80), which converts the output datum (y) into the control signals (A). The control signals (A) are then transmitted to the actuator (10) for controlling the actuator (10) accordingly. Alternatively, the output datum (y) may directly be taken as control signal (A).

The actuator (10) receives control signals (A), is controlled accordingly and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

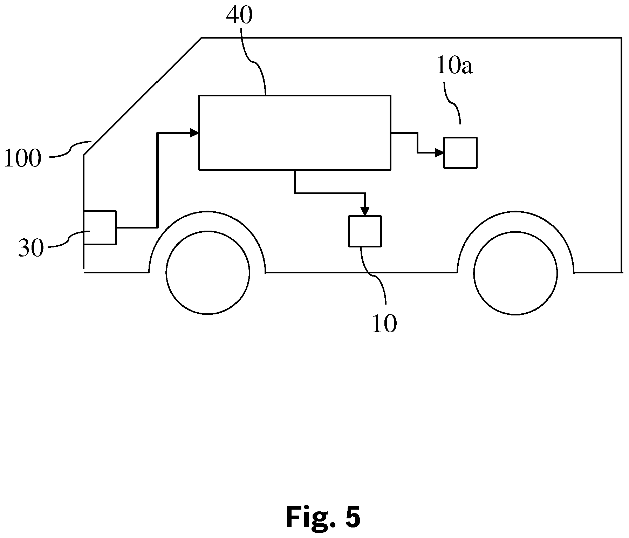

Figure 5 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100). The input datum (x) may hence be understood as an input image and the neural network (60) as an image classifier.

The neural network (60) may be configured to detect objects in the vicinity of the at least partially autonomous robot based on the input image (x). The output datum (y) may comprise an information, which characterizes where objects are located in the vicinity of the at least partially autonomous robot. The control signal (A) may then be determined in accordance with this information, for example to avoid collisions with the detected objects.

The actuator (10), which is preferably integrated in the vehicle (100), may be given by a brake, a propulsion system, an engine, a drivetrain, or a steering of the vehicle (100). The control signal (A) may be determined such that the actuator (10) is controlled such that vehicle (100) avoids collisions with the detected objects. The detected objects may also be classified according to what the neural network (60) deems them most likely to be, e.g., pedestrians or trees, and the control signal (A) may be determined depending on the classification.

Alternatively or additionally, the control signal (A) may also be used to control the display (10a), e.g., for displaying the objects detected by the neural network (60). It can also be imagined that the control signal (A) may control the display (10a) such that it produces a warning signal if the vehicle (100) is close to colliding with at least one of the detected objects. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, an control signal (A) may be determined to cause the actuator (10) to spray the plants with a suitable quantity of suitable liquids and/or cut the plants.

In even further embodiments, the at least partially autonomous robot may be given by a domestic appliance (not shown), like e.g. a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

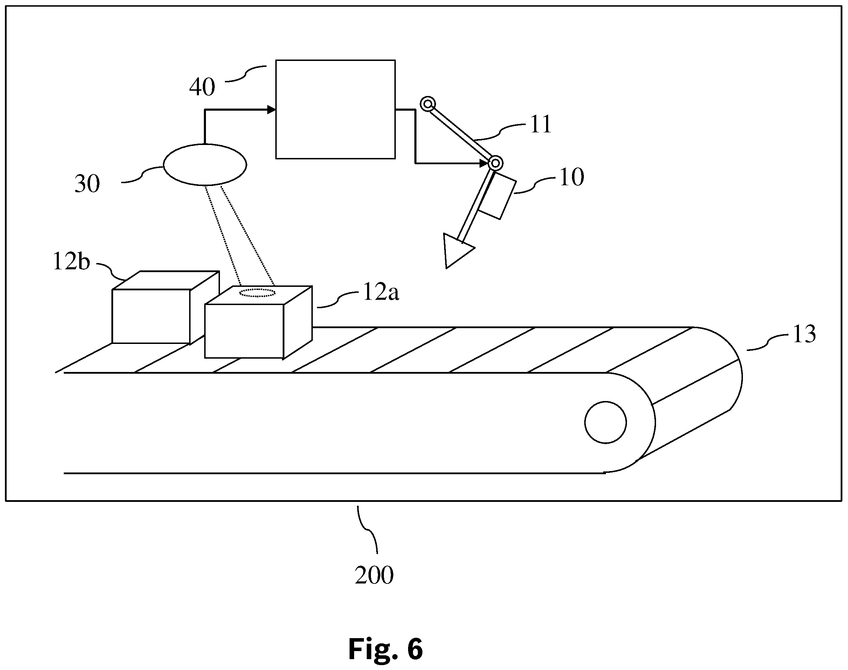

Figure 6 shows an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12). The neural network (60) may hence be understood as an image classifier.

The neural network (60) may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. Alternatively, it may be envisioned that the neural network (60) classifies, whether the manufactured product is broken and/or exhibits a defect. The actuator (10) may then be controlled as to remove the manufactured product from the transportation device.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises $N$ elements, wherein $N$ is the number of elements in the plurality, the elements are assigned the integers from 1 to $N$. It may also be understood that elements of the plurality can be accessed by their index.

**Claims**

1. Computer-implemented method for finetuning a neural network (60) comprising the steps of:

    • Providing an input ($x_l$) to a layer ($l, l_1, l_2, l_k$) of the neural network (60), wherein the input ($x_l$) is an input datum ($x_i$) of the neural network (60) or a representation of the input datum ($x_i$);
    • Determining a block-diagonal matrix ($Q$);
    • Determining a first matrix ($M_1$) by multiplying the block-diagonal matrix ($Q$) with a weight matrix ($W$) of the layer, wherein the result of the multiplication is obtained by multiplying at least a plurality, preferably all, blocks ($B_1, B_2, B_n$) of the block-diagonal matrix ($Q$) with a respective part ($W_1, W_2, W_n$) of the weight matrix ($W$) in parallel computing operations and combining the result to form the first matrix ($M_1$);
    • Determining an output ($o_l$) of the layer ($l, l_1, l_2, l_k$) by multiplying the first matrix ($M_1$) with the input ($x_l$) of the layer ($l, l_1, l_2, l_k$);
    • Determining an output ($y_i$) of the neural network (60) based on the output ($o_l$) of the layer ($l, l_1, l_2, l_k$);
    • Adapting elements of the block-diagonal matrix ($Q$) based on a difference of the output ($y_i$) of the neural network (60) and a desired output ($t_i$) with respect to the input datum ($x_i$).

2.  Method according to claim 1, wherein a block ($B_1$, $B_2$, $B_n$), preferably all blocks ($B_1$, $B_2$, $B_n$), of the block-diagonal matrix ($Q$) characterizes a Householder transformation.

3.  Method according to claim 1 or 2, wherein the block-diagonal matrix ($Q$) is determined according to the formula:

$$Q = diag(H^1, \ldots, H^n) = I - 2 \begin{pmatrix} \hat{u}_1 \hat{u}_1^T & & \\ & \ddots & \\ & & \hat{u}_n \hat{u}_n^T \end{pmatrix},$$

wherein $\hat{u}_1$ to $\hat{u}_n$ are vectors for the $n$ blocks ($B_1$, $B_2$, $B_n$) of the block-diagonal matrix, each block in the matrix on the right size of the equation is an outer product of one of the vectors respectively and $I$ is the identity matrix.

4.  Method according to claim 3, wherein the vectors $\hat{u}_1$ to $\hat{u}_n$ are trainable parameters of the neural network (60) and adapting elements of the block-diagonal matrix (Q) is achieved by adapting at least one of the vectors $\hat{u}_1$ to $\hat{u}_n$.

5.  Method according to any one of the claims 1 to 4, wherein the input datum ($x_i$) comprises or consists of a sensor signal, an image or an digital audio signal and/or wherein the output ($y_i$) of the neural network (60) characterizes a classification of the input datum and/or a result of a regression analysis of the input datum and/or a probability of the input datum to occur in a dataset.

6.  Method according to any one of the claims 1 to 4, wherein the input datum ($x_i$) comprises or consists of a textual description of an image and the output ($y_i$) of the neural network (60) comprises or consists of an image with visual properties as was desired by the textual description.

7.  Method according to any one of the claims 1 to 4, wherein the input datum ($x_i$) comprises or consists of a textual description and the output ($y_i$) of the neural network (60) also comprises of consists of a textual description.

8.  Method according to anyone of the previous claims, wherein the output of the layer ($o_l$) is determined by additionally adding a bias value to the result of the multiplication of the first matrix ($M_1$) and the input and providing the result of the addition as output of the layer.

9.  Method according to any one of the claims 1 to 8, wherein the neural network (60) comprises a plurality of layers configured as the layer.

10. Computer-implemented method for determining an output ($y$) of a neural network (60) using an input datum ($x$) as input to the neural network (60), wherein the neural network (60), the input datum ($x$), and the output ($y$) are configured according to any one of the claims 1 to 9.

11. System (140) configured to carry out the finetuning method according to any one of the claims 1 to 9.

12. System (40) configured to determine an output ($y$) according to claim 10.

13. System (40) according to claim 12, wherein the system is further configured to determine a control signal (A) of an actuator (10) of a technical system (100, 200) and/or a display (10a) of the technical system (100, 200).

14. Computer program that is configured to cause a computer to carry out the method according to any one of the claims 1 to 10 with all of its steps if the computer program is carried out by a processor (145).

15. Machine-readable storage medium (146) on which the computer program according to claim 12 is stored.

**Amended claims in accordance with Rule 137(2) EPC.**

1.  Computer-implemented method for finetuning a neural network (60) comprising the steps of:

    • Providing an input ($x_l$) to a layer ($l$, $l_1$, $l_2$, $l_k$) of the neural network (60), wherein the input ($x_l$) is an input datum ($x_i$) of

the neural network (60) or a representation of the input datum ($x_i$);
• Determining a block-diagonal matrix ($Q$);
• Determining a first matrix ($M_1$) by multiplying the block-diagonal matrix ($Q$) with a weight matrix ($W$) of the layer, wherein the result of the multiplication is obtained by multiplying at least a plurality, preferably all, blocks ($B_1$, $B_2$, $B_n$) of the block-diagonal matrix ($Q$) with a respective part ($W_1$, $W_2$, $W_n$) of the weight matrix ($W$) in parallel computing operations and combining the result to form the first matrix ($M_1$), wherein each parallel computing operation determines a respective results of a multiplication of a block ($B_1$, $B_2$, $B_n$) and its corresponding respective corresponding part ($W_1$, $W_2$, $N_n$);
• Determining an output ($o_l$) of the layer ($l$, $l_1$, $l_2$, $l_k$) by multiplying the first matrix ($M_1$) with the input ($x_l$) of the layer ($l$, $l_1$, $l_2$, $l_k$);
• Determining an output ($y_i$) of the neural network (60) based on the output ($o_l$) of the layer ($l$, $l_1$, $l_2$, $l_k$);
• Adapting elements of the block-diagonal matrix ($Q$) based on a difference of the output ($y_i$) of the neural network (60) and a desired output ($t_i$) with respect to the input datum ($x_i$).

2. Method according to claim 1, wherein a block ($B_1$, $B_2$, $B_n$), preferably all blocks ($B_1$, $B_2$, $B_n$), of the block-diagonal matrix ($Q$) characterizes a Householder transformation.

3. Method according to claim 1 or 2, wherein the block-diagonal matrix ($Q$) is determined according to the formula:

$$Q = diag(H^1, ..., H^n) = I - 2 \begin{pmatrix} \hat{u}_1 \hat{u}_1^T & & \\ & \ddots & \\ & & \hat{u}_n \hat{u}_n^T \end{pmatrix},$$

wherein $\hat{u}_1$ to $\hat{u}_n$ are vectors for the $n$ blocks ($B_1$, $B_2$, $B_n$) of the block-diagonal matrix, each block in the matrix on the right size of the equation is an outer product of one of the vectors respectively and $I$ is the identity matrix.

4. Method according to claim 3, wherein the vectors $\hat{u}_1$ to $\hat{u}_n$ are trainable parameters of the neural network (60) and adapting elements of the block-diagonal matrix ($Q$) is achieved by adapting at least one of the vectors $\hat{u}_1$ to $\hat{u}_n$.

5. Method according to any one of the claims 1 to 4, wherein the input datum ($x_i$) comprises or consists of a sensor signal, an image or an digital audio signal and/or wherein the output ($y_i$) of the neural network (60) characterizes a classification of the input datum and/or a result of a regression analysis of the input datum and/or a probability of the input datum to occur in a dataset.

6. Method according to any one of the claims 1 to 4, wherein the input datum ($x_i$) comprises or consists of a textual description of an image and the output ($y_i$) of the neural network (60) comprises or consists of an image with visual properties as was desired by the textual description.

7. Method according to any one of the claims 1 to 4, wherein the input datum ($x_i$) comprises or consists of a textual description and the output ($y_i$) of the neural network (60) also comprises of consists of a textual description.

8. Method according to anyone of the previous claims, wherein the output of the layer ($o_l$) is determined by additionally adding a bias value to the result of the multiplication of the first matrix ($M_1$) and the input and providing the result of the addition as output of the layer.

9. Method according to any one of the claims 1 to 8, wherein the neural network (60) comprises a plurality of layers configured as the layer.

10. Computer-implemented method for determining an output ($y$) of a neural network (60) using an input datum ($x$) as input to the neural network (60), wherein the neural network (60), the input datum ($x$), and the output ($y$) are configured according to any one of the claims 1 to 9.

11. System (140) configured to carry out the finetuning method according to any one of the claims 1 to 9.

12. System (40) configured to determine an output ($y$) according to claim 10.

13. System (40) according to claim 12, wherein the system is further configured to determine a control signal (A) of an actuator (10) of a technical system (100, 200) and/or a display (10a) of the technical system (100, 200).

14. Computer program that is configured to cause a computer to carry out the method according to any one of the claims 1 to 10 with all of its steps if the computer program is carried out by a processor (145).

15. Machine-readable storage medium (146) on which the computer program according to claim 12 is stored.

Fig. 1

**Fig. 2**

EP 4 632 604 A1

**Fig. 3**

EP 4 632 604 A1

Fig. 4

EP 4 632 604 A1

**Fig. 5**

**Fig. 6**

EP 4 632 604 A1

**EUROPEAN SEARCH REPORT**

**Application Number**

EP 24 17 0028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZEJU QIU ET AL: "Controlling Text-to-Image Diffusion by Orthogonal Finetuning", ARXIV.ORG, CORNELL UNIVERSITY LIBRARY, 201 OLIN LIBRARY CORNELL UNIVERSITY ITHACA, NY 14853, 14 March 2024 (2024-03-14), XP091695816, * page 3, paragraph 2 * * page 5, paragraph 1 - paragraph 4 * * page 6, last paragraph * * page 4, last paragraph * * figure 1 * | 1-15 | INV. G06F17/16 G06N3/0475 G06N3/096 |
| A | Mathiasen Alexander ET AL: "Faster Orthogonal Parameterization with Householder Matrices", , 18 July 2020 (2020-07-18), XP055808212, ICML Workshop on Invertible Neural Networks and Normalizing Flows, 2020 Retrieved from the Internet: URL:https://invertibleworkshop.github.io/accepted_papers/pdfs/10.pdf [retrieved on 2021-05-27] * page 1, right-hand column, paragraph 1 - page 3, right-hand column, paragraph 1 * | 1,11,14 | |

TECHNICAL FIELDS SEARCHED (IPC)

G06F
G06N

-/--

The present search report has been drawn up for all claims

| Place of search | Date of completion of the search | Examiner |
|---|---|---|
| Munich | 11 October 2024 | Herri, Edmond |

EPO FORM 1503 03.82 (P04C01)

Europäisches
Patentamt

European
Patent Office

Office européen
des brevets

**EUROPEAN SEARCH REPORT**

Application Number

EP 24 17 0028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MURAKAMI HIROSHI: "An Implementation of the Block Householder Method", COMPUTER SYSTEMS SYMPOSIUM PROCEEDINGS, vol. 47, no. 0, 15 May 2006 (2006-05-15), pages 61-80, XP093212128, JP ISSN: 1882-7829, DOI: 10.2197/ipsjdc.2.298 Retrieved from the Internet: URL:http://id.nii.ac.jp/1001/00018330/> * page 61, left-hand column, paragraph 1 - page 62, left-hand column, paragraph 3 * * page 62, left-hand column, paragraph 4 - page 63, right-hand column, paragraph 1 * * page 66, left-hand column, paragraph 1 - right-hand column, paragraph 4 * * page 73, right-hand column, last paragraph - page 74, left-hand column, paragraph 1 * * page 78 - page 79 * ----- | 1,11,14 | |
| A | BERRY MICHAEL ET AL: "An overview of parallel algorithms for the singular value and symmetric eigenvalue problems", JOURNAL OF COMPUTATIONAL AND APPLIED MATHEMATICS, vol. 27, no. 1-2, 30 September 1989 (1989-09-30), pages 191-213, XP093213649, NL ISSN: 0377-0427, DOI: 10.1016/0377-0427(89)90366-X * page 191 - page 192 * * page 200 - page 201 * ----- -/-- | 1,11,14 | **TECHNICAL FIELDS SEARCHED (IPC)** |

The present search report has been drawn up for all claims

| Place of search | Date of completion of the search | Examiner |
|---|---|---|
| Munich | 11 October 2024 | Herri, Edmond |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

## EUROPEAN SEARCH REPORT

**Application Number**

EP 24 17 0028

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHANG SHAOSHUAI ET AL: "High Accuracy Matrix Computations on Neural Engines: A Study of QR Factorization and its Applications", SYMPOSIUM ON SPATIAL USER INTERACTION, ACMPUB27, NEW YORK, NY, USA, 23 June 2020 (2020-06-23), pages 17-28, XP059534968, DOI: 10.1145/3369583.3392685 ISBN: 978-1-4503-9096-5 * page 19, left-hand column, paragraph 1 - page 20, left-hand column, paragraph 2; figure 1; table 1 * ----- | 1,11,14 | |

TECHNICAL FIELDS
SEARCHED    (IPC)

The present search report has been drawn up for all claims

| Place of search | Date of completion of the search | Examiner |
|---|---|---|
| Munich | 11 October 2024 | Herri, Edmond |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **QIU et al.** *Controlling text-to-image diffusion by orthogonal finetuning*, 2023, https://arxiv.org/abs/2306.07280v1